# EUROPEAN PATENT SPECIFICATION

(11) **EP 1 511 167 B1**
(45) Date of publication and mention of the grant of the patent: **17.02.2016**
(21) Application number: 04020257.4
(22) Date of filing: 26.08.2004
(51) Int. Cl.: H02M 3/158, H02J 9/06, H02M 1/32

(54) **Fault tolerant power supply system**
Fehlertolerantes Stromversorgungssystem
Système d'alimentation de courant tolérant des défauts

(30) Priority: 29.08.2003 US 498595 P; 18.08.2004 US 920414
(43) Date of publication of application: 02.03.2005
(73) Proprietor: THALES S.A., 92400 Courbevoie (FR)
(72) Inventor: Philips, Leslie Pieter, Maple L6A 3T3 Ontario (CA)
(74) Representative: Kohler Schmid Möbus Patentanwälte

(56) References cited:
- EP-A- 0 866 389
- US-A- 5 613 064
- US-A- 5 847 260
- US-B1- 6 181 029

## Description

### BACKGROUND OF THE INVENTION

### Field of the Invention

The present invention relates to the field of vital power supplies. More particularly, the present invention is directed to a vital power supply that provides appropriate monitoring and testing circuits so a redundant, back-up, power supply can be switched-in to provide power to a load in the event of a failure to the main supply. Preferably, the vital power supply of the present invention complies with CENELEC standards.

### Description of the Related Art

A vital power supply system is a system that provides essential power to a device or system even in the event that the primary power supply of the system is cut-off or is otherwise unable to provide power. In a system where power failure can be devastating, vital power supplies are crucial. For example, in a train system with over 368 stations and 15 underground lines (including 2 short lines) and with a length of 201 kilometers of track, which is used to transport roughly 6 million passengers a day, such as the Regie Autonome des Transports Parisiens (RATP) in Paris, France, failure to provide power to the systems that control the trains could potentially paralyze the entire city. Accordingly, a vital power supply system in which power delivery is guaranteed under virtually all circumstances is required for systems such as the RATP.

In particular, a Real Time Vital Control Unit (RTVCU) is a generic hardware / software platform for control applications that require safe / vital computing such as on board control, station control, wayside control, and central control of a rail system such as RATP. The RTVCU is the building block for Communications Based Train Control (CBTC) systems and basic train cab signaling applications. The RTVCU has 64K word addressable space for I/O, all inputs and outputs and peripheral devices are mapped into the available 64K x 16-bit I/O space and also has multiple serial interfaces as well as three 100 BASE-T Ethernet channels. Because the information provided by the Transponder Interrogator to the RTVCU is so essential, power to a device such as the Transponder must be ensured. Accordingly, such a device is a prime candidate for a vital power supply.

Furthermore, a vital power supply used in applications that involve public safety must typically comply with strict governmental standards. For example, with respect to a system such as the RATP mentioned above, a power supply used to power the trains and/or the control of the trains must comply with CENELEC standards, such as EN60950, the entire contents of which are incorporated herein by reference, which deals with information technology. CENELEC is the European Committee for Electrotechnical Standardization which was created in 1973 as a result of the merger of two previous European organizations: CENELCOM and CENEL. Today, CENELEC is a non-profit technical organization set up under Belgian law and composed of the National Electrotechnical Committees of 28 European countries.

CENELEC members have been working together in the interests of European harmonization since the 1950s, creating both standards requested by the market and harmonized standards in support of European legislation and which have helped to shape the European Internal Market. CENELEC works with 35,000 technical experts from 28 European countries. Its work directly increases market potential, encourages technological development and guarantees the safety and health of consumers and workers.

CENELEC's mission is to prepare voluntary electrotechnical standards that help develop the Single European Market/European Economic Area for electrical and electronic goods and services removing barriers to trade, creating new markets and cutting compliance costs.

United States Patent Number 6,320,404 ("the '404 patent) discloses a defective power source detection method and an apparatus for a power source supply system structured by including a plurality of power source devices that supply the power. The apparatus disclosed in the '404 patent includes an output monitoring voltage circuit for outputting a defect signal upon detection of a defective output state. The '404 patent, however, does not disclose a power supply system that continuously monitors output power and controls output tolerance levels and which complies with CENELEC standards.

United States Patent Number 6,590,788 ("the '788 patent") discloses a universal switching power supply for generating one or more output voltage levels wherein the power supply is operable over a range of AC and DC input supply voltages. The universal switching power supply achieves a ratio between the highest voltage and lowest voltage of at least 27. The universal switching power supply also features an intrinsically safe output. The intrinsically safe output circuitry comprises a multi-layer PCB with a planar core transformer. Additionally, the '788 patent discloses compliance with a specific CENELEC standard. Specifically, to obtain an isolated output while meeting the spacing/layout requirements according to CENELEC standard EN 50020 and to comply with the international safety standard IEC 1010-1 to get CSA and FM approvals, according to the '788 patent the switching power supply includes a transformer with a multi-layer PCB. Utilizing a multi-layer PCB, the spacing requirements are obtained by laying out windings for the transformer within the PCB board/layers. (Col. 1, line. 64 through Col. 2, lines 6).

The '788 patent, however, does not disclose a vital power supply that continuously monitors output power and controls output tolerance levels and which complies with CENELEC standards.

EP-A-0866389 discloses a related power supply system.

No conventional vital power supply system continuously monitors output power and controls output tolerance levels and complies with CENELEC standards. Thus, it is desired to provide a vital power supply that continuously monitors the power delivered to a vital load and, preferably, complies with the standards provided by CENELEC.

### SUMMARY OF THE INVENTION

To address the above-mentioned void in conventional power supply systems, the present invention is provided.

One object of the present invention is to provide a vital power supply system that provides supervisory circuits to maintain vitality of the power supply and, preferably, complies with CENELEC standards.

In one aspect of the present invention, there is provided a power supply system according to claim 1.

In accordance with an exemplary embodiment of the invention, a power supply system is provided for supplying power to a device, the system comprises a voltage converter for producing a desired voltage and first and second vitality monitoring circuits for monitoring the voltage produced by the voltage converter and for producing respective reference voltages. A control system including two or more processing units operably connected to the vitality monitoring circuits is also provided, the control system being operable to determine a vitality of the converter based on outputs from the vitality monitoring circuits and further operable to shut down the power being supplied by one converter to the device, by placing that particular power supply in a standby mode, based on a determination from at least two of the processing units. When one converter is taken offline, or put in standby mode, another similarly controlled power supply is placed online. Accordingly, power is supplied to the device even when one of the two connected power supplies is faulty.

In accordance with a further embodiment, a power supply system is provided similar to the system mentioned above but with a converter that provides multiple voltages. Vitality monitoring circuits are provided for each of the output voltages that can be independently tested and shut down, if necessary, based on control signals from at least two of the processing units.

Other aspects and features of the present invention will become apparent to those ordinarily skilled in the art upon review of the following description of exemplary embodiments of the invention in conjunction with the accompanying figures.

### BRIEF DESCRIPTION OF THE DRAWINGS

Reference will now be to the accompanying drawings, which show by way of example, preferred embodiments of the present invention, and in which:
FIG. 1 illustrates a power supply system according to an exemplary embodiment of the present invention;
FIG. 2 illustrates a detailed representation of the switch groups shown in FIG. 1;
FIG. 3 illustrates a further embodiment in accordance with the present invention.

### DETAILED DESCRIPTION OF THE INVENTION

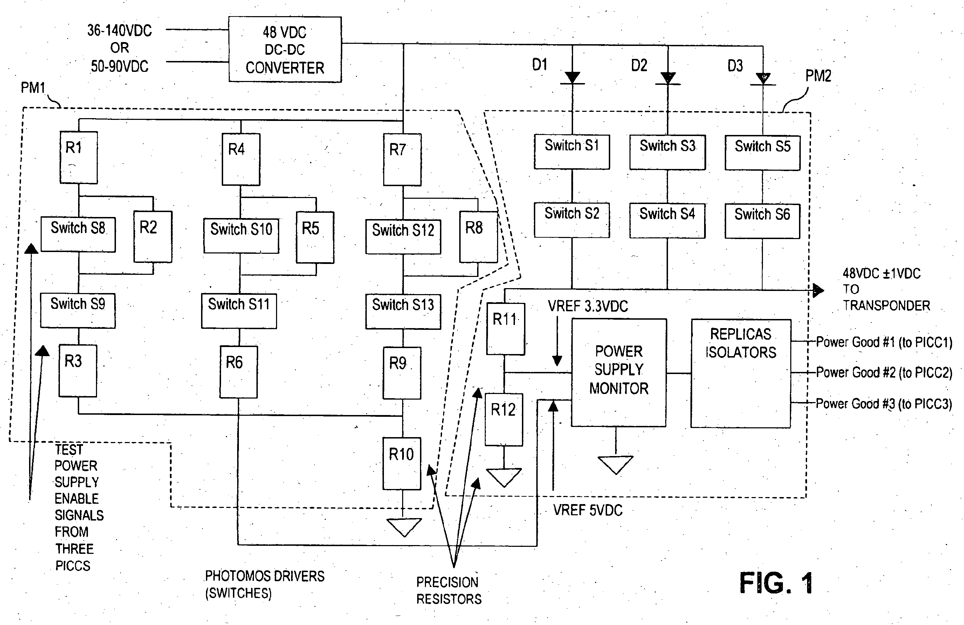

Referring to FIG. 1, an exemplary, non-limiting embodiment of the vital power supply system will now be described. As shown in FIG. 1, a 48 VDC DC-DC converter is provided with, for example, an input voltage of 36-140 volts DC. In accordance with the present invention, other input and output voltages to and from the DC converter are also possible. For example, 50-90 volts DC could also be provided as the input voltage to the 48 DC-DC converter. The output of the 48 VDC DC-DC converter in FIG. 1 is provided to two power monitoring circuit sections that guarantee the vitality of the power supply. The two power monitoring circuits are represented as PM1 and PM2 as shown in FIG. 1 and each provides a reference voltage to a power supply monitor device, which is included as part of the control system of the vital power supply system.

The power supply monitor provides over-voltage and under-voltage protection, based on the outputs of the power monitoring circuits. When an over-voltage or under-voltage condition is detected, the "Power Good" output of the power supply monitor is asserted low and the fault is latched. If the fault condition clears up, the latch controlling the "Power Good" circuit in the power supply monitor is cleared once the condition is detected and debounced.

An "out-of-tolerance" condition causes the power supply monitor to switch a logic level of the "Power Good" signal to a level that indicates the power is not good which, for example, turns ON an LED indicator mounted on the front panel of.the VPS, indicating a problem. The "Power Good" signal is optically isolated, replicated and transmitted to the Peripheral Interface Communications Control (PICC) modules in the Peripheral Processing Unit (MPU) (not shown). Although the details of the PICC and PPU are not required for an understanding of the VPS according to the present invention, a brief description is provided below.

The PICC and PPU are subsystems that are necessary for controlling both driverless and driver operated trains. In accordance with one embodiment, a PICC, which is part of the control system of the vital power supply, is a DSP based 3U-Euro card that controls the peripheral equipment attached to the train, monitors status, speed sensors, accelerometers, provides safety features and vital check back signals necessary for Automatic Train Control System Applications. The PPU is the interface that directly connects to the train control circuits and train line to monitor and collect the status of the control signals, speed of train, conditions of the train power supplies and propulsion systems etc. These subsystems are not part of the vital power supply unit, but reside at the top level hardware implementation of the whole train control system so no further description is provided.

Power monitoring circuit PM2 is referred to herein as the output voltage tolerance test circuit since it monitors the output voltage of the 48 VDC supply, and circuit PM1 is referred to as the input voltage tolerance test circuit since its main function is to monitor the voltage being input to the output voltage test circuit, determine if the voltage is adequate, and modify the tolerance of the determination. The tolerance levels associated with circuit PM1 are controllably adjusted such that various voltage specifications can be accommodated.

A description of circuits PM1 and PM2 shown in FIG. 1 will now be provided.

In regard to circuit PM2, i.e., the output voltage test circuit, PhotoMOS switches, S1-S6, shown on the top, right-hand side of FIG. 1, are selectively enabled by three Peripheral Interface Communications Control (PICC) modules (not shown), as discussed below. The three PICC modules each receive a respective copy of the "Power Good" signal, i.e., Power Good #1, #2 and #3, the logic state of which indicates whether or not an adequate 48 VDC voltage is being delivered from the 48 VDC converter and whether an adequate voltage is being provided to the load, e.g., the RATP Transponder in the present embodiment.

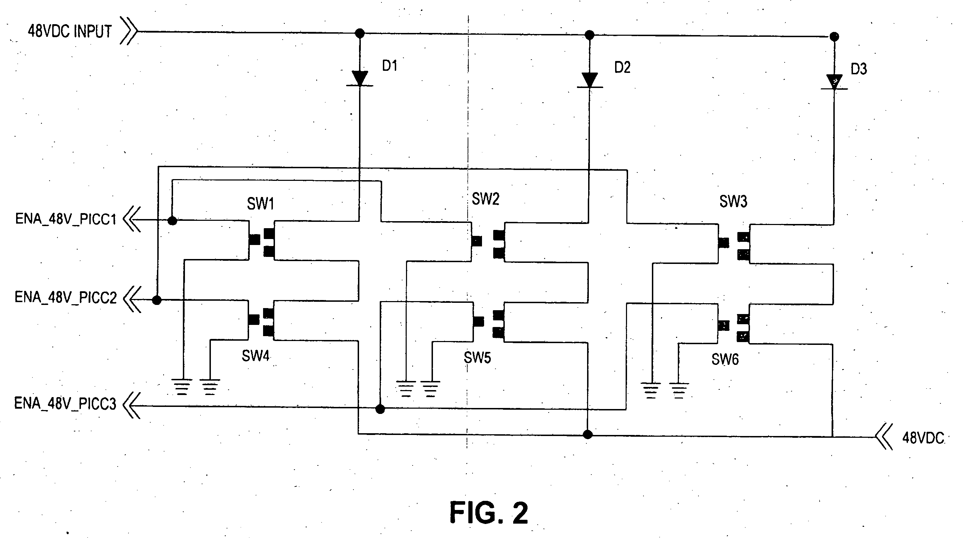

The PICCs, which include respective DSPs, receive their respective replicas of the "Power Good" signal and generate enable signals based on the logic state of the "Power Good" signal. The PICCs determine the control state of the enable signals based on a programmed algorithm and the values of the "Power Good" signal and various other inputs as required. The enable signals thus generated are provided to the various switches of PM1 and PM2, the details of which are shown in FIG. 2. Use and effect of the enable signals as they pertain to the respective switches of PM1 and PM2 is described below.

In regard to PM2, a reference voltage is derived that indicates the value of the voltage being supplied to the load, e.g., the 48VDC provided to the transponder. More particularly, as shown on the right-hand side of FIG. 1, pairs of switches (S1, S2) and or (S3, S4) and or (S5, S6) or all three pairs enable the 48VDC power to be supplied to the load. As mentioned above, FIG. 2 illustrates a detailed representation of the switches provided in PM2. That is, in regard to PM2, switches SW1-SW6 in FIG. 2 represent switches S1-S6 of FIG. 1, respectively.

The output of the 48VDC converter is provided respectively, to the three switch circuits comprising S1-S2, S3-S4 and S5-S6, respectively. Further, resistors R11 and R12 are precision resistors and comprise a voltage divider which is used to provide a sample reference voltage, for example, 3.3VDC, which is derived from the output of the 48VDC power source after the switches S1-S6. As shown, the sample reference voltage is provided to the power supply monitor IC which determines, based on the value of the reference signal, what the logic state of the "Power Good" signal will be. Each of the PICCs receives a replica of the "Power Good" logic signal and after performing their respective processing in respective DSPs, provides respective enable signals ENA_48_PICC1, ENA_48_PICC2 and ENA_488_PICC3, as shown in FIG. 2, to controllable enable the switches.

For example, referring to FIG. 2, -depending on which pair (s) of switches (SW1, SW4) and or (SW2, SW5) and or (SW3, SW6), which correspond with respect to PM2 to switches S1-S6, are enabled, the 3.3 VDC reference voltage will be generated. Specifically, each of switches SW1-SW6 is controllably enabled by a particular enable signal. For instance, according to one embodiment, SW1 and SW2 are controlled by enable signal ENA_48V_PICC1, which comes from PICC1; SW3 and SW4 are controlled by enable signal ENA_48V_PICC2, which comes from PICC2; and SW5 and SW6 are controlled by enable signal ENA_48V_PICC3, which comes from PICC3.

Accordingly, the 48VDC input voltage shown at the top of FIG. 2 is selectively provided through the switch pairs at the bottom of FIG. 2 based on the relative positions of switches SW1-SW6. If all switches SW1-SW6 are enabled, the input voltage is provided through all three switch pairs. However, if, for example, SW1 is not enabled, (because PICC1 has not generated a valid enable signal, ENA_48V_PICC1) switches SW1 and SW2 will not be enabled, thus, both switch pairs SW1/SW4 and SW2/SW5 will be unable to provide the input voltage as shown near the bottom of FIG. 2. Under these conditions, the only path through which the input voltage can be provided to the output is through switch pair SW3/SW6. Alternatively, if PICC2 fails to provide an enable signal, i.e., ENA_48V_PICC2, switches SW3 and SW4 will be disabled and the only path through which the input voltage can be provided to the output is through switch pair SW2/SW5. A similar condition arises if PICC3 fails to enable SW5 and SW6. That is, under this condition the only path through which the input voltage can be provided to the output is through switch pair SW1/SW4, because switches SW5 and SW6 would be disabled.

Referring to FIG. 1, based on the above discussion in regard to respective enabling of switches SW1-SW6 in FIG. 2, which correspond directly to switches S1-S6 in FIG. 1, it is understood that the reference voltage, e.g., 3.3 VDC, is generated at the input to the power supply monitor only if at least two of the three PICCs generate their respective enable signals for the switches. That is, if two or more of the PICCs fail to generate their respective enable signal, there will be no path through which the 48VDC output of the DC-DC .converter can traverse to provide an input to the voltage divider comprising R11 and R12, to generate the reference voltage. Further, although it is described in this embodiment that the reference voltage is 3.3 VDC, based on the respective values of R11 and R12 and the 48 VDC output voltage of the DC-DC converter. The 3.3 VDC reference can be obtained by selecting appropriate ratio of resistor values for R11 and R12 that depends on the output voltage desired to meet the particular application.

Therefore, in regard to the power monitoring circuit PM2, if the output of the 48VDC power source is either above or below a rated tolerance, as determined by the power supply monitor based on the value of the reference voltage generated by voltage divider R11 and R12, the power supply monitor will generate an over voltage or under-voltage condition, respectively, and control the logic state of the "Power Good" signal, accordingly. The "Power Good" signal is replicated and sent to each of the respective PICCs which in turn, inform their respective main processors (MPU).

The main processors (MPU) (not shown) include, for example, Pentium II or III class based 3U-Euro-cards that function under the TAS Operating System Software designed for train control applications. The PICC modules inform MPU counterparts via CAN (Controller Area Network) individually. For example, as mentioned above, the status of the power supply is provided to the MPU and, if necessary, the MPU cause a corrective action based on the fault management system implemented for the intended application.

In accordance with one embodiment, the fault management system is a unique piece of software that is application specific. A fault management system implemented for this application is designed to resolve problems by degrading the system in a controlled and safe way. Depending on the severity of the fault and the safety requirements that have been specified for the application, the fault management system will, for example, inform the train driver there is a serious issue that has to be resolved. Further, at the next train stop the propulsion systems will be disabled so the train cannot be move until the problem is resolved at the station. Alternatively, the fault management system in a driverless train would inform the subway system operators that there is a problem with a specific train on a specific line, the location, speed, direction of travel and the nearest station stop possible. The level of sophistication and the extent of control is strictly a matter of choice selected by the application.

Description will now be made for power monitor circuit PM1, shown on the left-hand side of FIG. 1. It should be noted that switches S8-S13 of PM1 are each configured identically to the switch configuration shown in FIG. 2. That is, unlike the switches in PM1 where each switch S1-S8 corresponded to SW1-SW8 of FIG. 2, respectively, the switches in PM1 each comprise all six switches SW1-SW6 of FIG. 2. A more detailed description of the operation of switches S8-S13 is provided below.

Referring to FIG. 1, the switches, S8-S13, in PM1 are each configured similar to the six switches illustrated in FIG. 2 and they each operate as follows. In particular, each switch, S8-S13, is controllably enabled by three enable signals generated by the three respective PICCs. Specifically, each of the switches is controlled by ENA_48V_PICC1, ENA_48V_PICC2 and ENA_48V_PICC3. Accordingly, various switch conditions can be achieved by selectively enabling switches S8-S13.

In particular, using three separate current paths, beginning at R1, R4 and R7, respectively, a 5 volt reference voltage is increased or decreased based on whether or not certain switches, S8-S13, are enabled and whether resistors R2, R5 and R8 are placed within the respective current paths. Depending on whether or not the switches are enabled, the equivalent resistance of the resistor network of PM1 changes and, thus, the equivalent potential at the junction of R9 and R10 changes. If the voltage at the junction of R9 and R10 drops below the preferred 5VDC level, an under-voltage condition is determined in the power supply monitor and the Power Good" signal output from the power supply monitor indicates that power is not good. The replication circuit takes the "Power Good" logic signal from the power supply monitor and passes it through the three independent opto-isolator circuits producing three identical replicas of the "Power Good" signal, each galvanically isolated from the others, and supplies them to the three respective PICC modules.

In regard to PM1, when switches S8, S10 or S12 are enabled, resistors R2, R5 and R8, respectively, are bypassed and R1 in series with R3, R4 in series with R6, and/or R7 in series with R9, provide three parallel current paths. The equivalent resistance of the PM1 circuit is then reduced to two thirds or one third the value of R9, depending on which switches are enabled and which ones are disabled. Further, lowering the equivalent value of the resistor network causes the potential at the junction of R9 and R10 to increase above a 5VDC reference level, which causes an out of tolerance condition, i.e., "over-voltage", at the 5V input to the power supply monitor illustrated as part of PM2. Alternatively, by switching resistors R2, R5 and/or R8 to be within the respective current paths of PM1, i.e., by disabling switches S8, S10 and S12, respectively, the voltage at the junction of R9 and R10 will drop below the expected 5VDC sampled reference to the power supply monitor and an "under-voltage" condition is determined. Accordingly, either an under-voltage or an over-voltage condition on the 5VDC reference line causes the "Power-Good" logic signal out of the power supply monitor to indicate that the power level is not good.

As mentioned previously with respect to the power monitor circuit PM2, the PICCs provide their respective processors with their copy of the "Power Good" logic signal and the processors determine which switches to enable and which ones to disable, i.e., by providing the appropriate level on the respective enable signals associated with the switches.

As an example, if it is determined by the PICCs that resistor R2 should be provided in the current path between R1 and S9, switch S8 would be disabled by providing the necessary signal level on at least two of the three enable signals that control S8. As understood from FIG. 2, it takes at least two of the three enable signals to be in the same logic state to control the switch one way or another. That is, if only PICC1 were to attempt to disable, i.e., open, a particular switch, the path through SW3/SW6 would still be closed. Alternatively, if both PICC1 and PICCS2 were to attempt to open S8, the switch would be opened since under these conditions all three paths within the switch, i.e.., SW1/SW4, SW2/SW5 and SW3/SW6, from FIG.2, would be opened and, thus, the switch S8 of FIG. 1 would be opened.

Each of the switches S8-S13 operates in similar fashion. That is, if two or three of the enable signals from the respective PICCs attempt to open or close a switch, the switch can be controlled, accordingly. However, if less than two of the PICCs are in agreement and, thus, and less than two enable signals attempt to control the switch, the desired function can not be performed. Accordingly, based on the respective logic levels of the enable signals, ENA_4 8V_PICC1, ENA_48V_PICC2 and ENA_4 8V_PICC3, different resistor network configurations can be achieved in PM1 by switching in, or out, resistor R2, R5 and R8, accordingly.

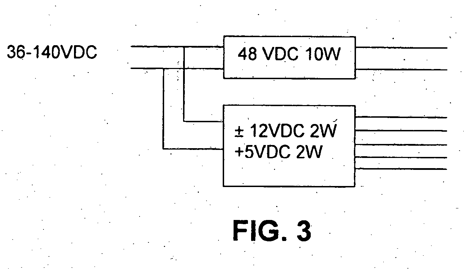

A second, non limiting, embodiment will now be described with reference to FIG. 3. According to the embodiment shown in FIG. 3, a vital power supply according to the present invention comprises commercial-off-the-shelf (COTS) power supplies and utilizes DC-DC converters qualified to CENELEC requirements. For example, available COTS ± 12VDC, 48VDC and 5VDC DC-DC converters are placed on a single Euro card, such as a 3U or 6U card. Since the converters are small enough, the monitoring circuits, as described above, and replication of the "Power Good" output and power shut-down circuits fit on the same Euro card as the converters. The power monitoring circuits, power supply monitor and replicating circuits in the second embodiment are the same as those discussed above in regard to the first embodiment and, thus, further detailed description of these circuits is not provided.

- Similar to the embodiment discussed above, a favorable "Power Good" logic signal is generated, for example, by the power supply monitor if there are no over-voltage or under-voltage conditions with the three supplies, i.e., the 5 VDC, + 12VDC and -12 VDC outputs, that it monitors. Should a fault condition occur on any one of the three output voltages the power supply monitor causes the "Power Good" logic signal output to indicate that power is not good. The replicating opto-isolator circuits convert this single output signal into three optically isolated signals that are made available to the three PICC modules that a fault has occurred.

As discussed above in regard to the first embodiment, power shut down circuits are also provided. Referring to FIG. 2, under SW1, the two PhotoMOS drivers energized, for example, by signals ENA_48_PICC1 and ENA_4 8_PICC2 are required for the +48VDC output voltage to be made available to an external load (not shown). As discussed above, the three PICC modules have to "vote" by enabling the voltage paths through three diodes (shown on the top right hand side of FIG. 1) for the power to be available. Should a fault condition occur with the vital power supply; the power supply monitor asserts an inverted "Power Good" signal indicating that the power is not good. The signal is replicated by the opto-isolator circuits and communicated to the PICC modules. The PICCs provide the "Power Good" signal to their respective processors and it is determined which switches will be enabled and which ones will be disabled. Accordingly, it takes at least two of the three PICCs to shut-down power. For instance, as described above, if only PICC1 were to vote to shut down power, thus, sending an appropriate level on its enable signal, and each of PICC2 and PICC3 send opposite enable signals, the power will not be shut down.

Advantages provided by the second embodiment include using COTS components that are already COTS qualified; the addition of monitoring, replicating and shutdown functional circuits are much easier; wide input voltage, e.g., 36-140VDC, are provided to accommodate, for example, the 55-90 VDC required by systems such as RATP. Additional benefits are that the present embodiment is cost efficient and the VPS system fits on a 3U Eurocard. Lastly, the present embodiment allows a wide range of DC-DC products from multiple sources to be used.

The above description of the preferred embodiments has been given by way of example. From the disclosure given, those skilled in the art will not only understand the present invention and its attendant advantages, but will also find apparent various changes and modifications to the structures and methods disclosed. It is sought, therefore, to cover all such changes and modifications as fall within the scope of the appended claims.

## Claims

1. A power supply system for supplying power to a load, the system comprising:
a voltage converter for producing a desired voltage;
first and second vitality monitoring circuits for monitoring the voltage produced by said voltage converter and produce respective reference voltages;
a control system comprising two or more processing units operably connected to the vitality monitoring circuits, the control system being operable to determine a vitality of the converter based on reference voltages from the vitality monitoring circuits and further operable to shut down the power being supplied to the load based on a determination to shut down the power from at least two of the processing units,
**characterized in that**
said first vitality monitoring circuit comprises two or more circuit branches, each branch comprising one or more switches each having an opened and a closed setting and one or more resistors, **in that** further, the respective reference voltage from said first vitality monitoring circuit is controlled by the settings of the switches, and
**in that** each of the switches of the first vitality monitoring circuit is identical and the settings of the switches are controlled by respective inputs from at least two of the processing units.

2. A power supply system as claimed in claim 1, wherein said control system further comprises a power supply monitor operable to receive the respective reference voltages from said first and second vitality monitoring circuits.

3. A power supply system as claimed in claim 1, wherein the resistors of the first vitality monitoring circuit form a voltage divider for controlling the voltage level of the reference voltage of the first vitality monitoring circuit and wherein the value of the voltage divider is determined based on the settings of the switches.

4. A power supply system as claimed in claim 1, wherein said second vitality monitoring circuit comprises two or more circuit branches, each branch comprising two or more switches each having an opened setting and a closed setting.

5. A power supply system as claimed in claim 4, wherein the switches are each controlled by a respective one of the processing units.

6. A power supply system as claimed in claim 4, wherein each of the circuit branches comprises a respective pair of switches and each pair of switches is controlled by two different ones of the processing units.

7. The power supply system of claim 2, wherein the power supply monitor generates a power-good signal indicating whether the power from the converter is good and wherein the power-good signal is based on the respective reference voltages from said first and second vitality monitoring circuits.

8. The power supply system of claim 7, further comprising a replicating circuit operable to receive the power good signal from the power supply monitor and generate multiple galvanically isolated copies for each of the respective processing units.

9. The power supply system according to claim 1, wherein the converter has at least four output voltages;
a first and a second of the vitality monitoring circuits corresponding to each of the output voltages for monitoring each output voltage;
wherein the control system comprises two or more processing units operably connected to the vitality monitoring circuits, the control system being operable to determine a vitality of each of the output voltages of the converter based on reference voltages from the vitality monitoring circuits and further operable to shut down one or more of the output voltages based on a determination to shut down the voltage from at least two of the processing units.

10. A power supply arrangement for supplying power to a load, comprising:
at least two power supply systems according to claim 1.

## Patentansprüche

1. Stromversorgungssystem zum Versorgen einer Last mit Strom, wobei das System aufweist:
einen Spannungswandler zum Erzeugen einer gewünschten Spannung;
erste und zweite Vitalitätsüberwachungsschaltungen zum Überwachen der von dem Spannungswandler erzeugen Spannung und zum Erzeugen jeweiliger Referenzspannungen;
ein Steuersystem umfassend zwei oder mehr Verarbeitungseinheiten, die funktionsfähig mit den Vitalitätsüberwachungsschaltungen verbunden sind, wobei das Steuersystem so betreibbar ist, dass es eine Vitalität des Wandlers auf der Basis von Referenzspannungen von den Vitalitätsüberwachungsschaltungen bestimmt und weiterhin so betreibbar ist, dass es den der Last zugeführten Strom auf der Basis einer Bestimmung, den Strom von mindestens zwei der Verarbeitungseinheiten abzuschalten, abschaltet,
**dadurch gekennzeichnet, dass**
die erste Vitalitätsüberwachungsschaltung zwei oder mehr Schaltungszweige aufweist, wobei jeder Zweig einen oder mehr Schalter aufweist, die jeweils eine offene und eine geschlossene Stellung und einen oder mehr Widerstände haben, dass weiterhin die jeweilige Referenzspannung von der ersten Vitalitätsüberwachungsschaltung durch die Schalterstellungen gesteuert wird, und
dass alle Schalter der ersten Vitalitätsüberwachungsschaltung identisch sind und die Stellungen der Schalter durch jeweilige Eingaben von mindestens zwei der Verarbeitungseinheiten gesteuert werden.

2. Stromversorgungssystem nach Anspruch 1, wobei das Steuersystem weiterhin eine Stromversorgungsüberwachung aufweist, die so betreibbar ist, dass sie die jeweiligen Referenzspannungen von der ersten und zweiten Vitalitätsüberwachungsschaltung empfängt.

3. Stromversorgungssystem nach Anspruch 1, wobei die Widerstände der ersten Vitalitätsüberwachungsschaltung einen Spannungsteiler bilden zum Steuern des Spannungspegels der Referenzspannung der ersten Vitalitätsüberwachungsschaltung und wobei der Wert des Spannungsteilers auf der Basis der Schalterstellungen bestimmt wird.

4. Stromversorgungssystem nach Anspruch 1, wobei die zweite Vitalitätsüberwachungsschaltung zwei oder mehr Schaltungszweige aufweist, wobei jeder Zweig zwei oder mehr Schalter aufweist, die jeweils eine offene und eine geschlossene Stellung haben.

5. Stromversorgungssystem nach Anspruch 4, wobei die Schalter alle von einer jeweiligen Verarbeitungseinheit gesteuert werden.

6. Stromversorgungssystem nach Anspruch 4, wobei jeder Schaltungszweig ein jeweiliges Schalterpaar aufweist und jedes Schalterpaar von zwei unterschiedlichen der Verarbeitungseinheiten gesteuert wird.

7. Stromversorgungssystem nach Anspruch 2, wobei die Stromversorgungsüberwachung ein Power-Good Signal erzeugt, das anzeigt, ob der Strom von dem Wandler gut ist und wobei das Power-Good Signal auf den jeweiligen Referenzspannungen von der ersten und zweiten Vitalitätsüberwachungsschaltung basiert.

8. Stromversorgungssystem nach Anspruch 7, weiterhin umfassend eine Replikationsschaltung, die so betreibbar ist, dass sie das Power-Good Signal von der Stromversorgungsüberwachung empfängt und mehrere galvanisch isolierte Kopien für jede der jeweiligen Verarbeitungseinheiten erzeugt.

9. Stromversorgungssystem nach Anspruch 1, wobei der Wandler mindestens vier Ausgangsspannungen hat;
wobei eine erste und eine zweite der Vitalitätsüberwachungsschaltungen jeweils den Ausgangsspannungen zum Überwachen jeder Ausgangsspannung entsprechen;
wobei das Steuersystem zwei oder mehr Verarbeitungseinheiten aufweist, die funktionsfähig mit den Vitalitätsüberwachungsschaltungen verbunden sind, wobei das Steuersystem betreibbar ist, um eine Vitalität jeder der Ausgangsspannungen des Wandlers auf der Basis von Referenzspannungen von den Vitalitätsüberwachungsschaltungen zu bestimmen und weiterhin betreibbar ist, um eine oder mehr der Ausgangsspannungen auf der Basis einer Bestimmung, die Spannung von mindestens zwei der Verarbeitungseinheiten abzuschalten, abzuschalten.

10. Stromversorgungsanordnung zum Versorgen einer Last mit Strom, umfassend:
mindestens zwei Stromversorgungssysteme nach Anspruch 1.

## Revendications

1. Système d'alimentation destiné à fournir une alimentation à une charge, le système comprenant :
un convertisseur de tension destiné à produire une tension souhaitée,
des premier et deuxième circuits de surveillance de vitalité destinés à surveiller la tension produite par ledit convertisseur de tension et à produire des tensions de référence respectives,
un système de commande comprenant deux ou plusieurs unités de traitement connectées fonctionnellement aux circuits de surveillance de vitalité, le système de commande pouvant être utilisé pour déterminer une vitalité du convertisseur sur la base des tensions de référence provenant des circuits de surveillance de vitalité et pouvant en outre être utilisé pour arrêter l'alimentation fournie à la charge sur la base d'une détermination pour arrêter l'alimentation provenant d'au moins deux des unités de traitement,
**caractérisé en ce que**
ledit premier circuit de surveillance de vitalité comprend deux ou plusieurs branches de circuit, chaque branche comprenant un ou plusieurs interrupteurs ayant chacun un réglage ouvert et fermé et une ou plusieurs résistances, **en ce que** en outre, la tension de référence respective provenant dudit premier circuit de surveillance de vitalité est commandée par les réglages des interrupteurs, et
**en ce que** chacun des interrupteurs du premier circuit de surveillance de vitalité est identique et les réglages des interrupteurs sont commandés par des entrées respectives provenant d'au moins deux des unités de traitement.

2. Système d'alimentation selon la revendication 1, dans lequel ledit système de commande comprend en outre un système de surveillance d'alimentation utilisable pour recevoir les tensions de référence respectives provenant desdits premier et deuxième circuits de surveillance de vitalité.

3. Système d'alimentation selon la revendication 1, dans lequel les résistances du premier circuit de surveillance de vitalité forment un diviseur de tension destiné à commander le niveau de tension de la tension de référence du premier circuit de surveillance de vitalité et dans lequel la valeur du diviseur de tension est déterminée sur la base des réglages des interrupteurs.

4. Système d'alimentation selon la revendication 1, dans lequel ledit deuxième circuit de surveillance de vitalité comprend deux ou plusieurs branches de circuit, chaque branche comprenant deux ou plusieurs interrupteurs ayant chacun un réglage ouvert et un réglage fermé.

5. Système d'alimentation selon la revendication 4, dans lequel les interrupteurs sont chacun commandés par une unité respective des unités de traitement.

6. Système d'alimentation selon la revendication 4, dans lequel chacune des branches de circuit comprend une paire respective d'interrupteurs et chaque paire d'interrupteurs est commandée par deux unités différentes des unités de traitement.

7. Système d'alimentation selon la revendication 2, dans lequel le système de surveillance d'alimentation génère un signal d'alimentation correcte indiquant si l'alimentation provenant du convertisseur est correcte et dans lequel le signal d'alimentation correcte est basé sur les tensions de référence respectives provenant desdits premier et deuxième circuits de surveillance de vitalité.

8. Système d'alimentation selon la revendication 7, comprenant en outre un circuit de réplication utilisable pour recevoir le signal d'alimentation correcte provenant du système de surveillance d'alimentation et générer de multiples copies isolées de manière galvanique pour chacune des unités de traitement respectives.

9. Système d'alimentation selon la revendication 1, dans lequel le convertisseur possède au moins quatre tensions de sortie,
un premier et un deuxième des circuits de surveillance de vitalité correspondant à chacune des tensions de sortie pour surveiller chaque tension de sortie,
dans lequel le système de commande comprend deux ou plusieurs unités de traitement connectées fonctionnellement aux circuits de surveillance de vitalité, le système de commande étant utilisable pour déterminer une vitalité de chacune des tensions de sortie du convertisseur sur la base de tensions de référence provenant des circuits de surveillance de vitalité et utilisable en outre pour arrêter une ou plusieurs des tensions de sortie sur la base d'une détermination pour arrêter la tension provenant d'au moins deux des unités de traitement.

10. Montage d'alimentation destiné à alimenter une charge, comprenant :
au moins deux systèmes d'alimentation selon la revendication 1.
